# EUROPEAN PATENT SPECIFICATION

(11) **EP 2 483 980 B1**
(45) Date of publication and mention of the grant of the patent: **06.11.2019**
(21) Application number: 09745170.2
(22) Date of filing: 30.09.2009
(51) Int. Cl.: H02G 5/02

(54) **VERTICAL ELECTRICAL BUSBAR SUPPORT SYSTEMS**
VERTIKALER STROMSCHIENENTRÄGER
BRIDE VERTICALE DE SUPPORT POUR BARRES CONDUCTRICES

(43) Date of publication of application: 08.08.2012
(73) Proprietor: ABB Schweiz AG, 5400 Baden (CH)
(72) Inventor: LEJAWKA, Maciej, Bartosz, PL-43-300 Bielsko-biala (PL); BATHLA, Dharamveer, Surya, Prakash, Secunderabad Andhra Pradesh 500003 (IN); NURZYNSKY, Jacek, Waclaw, Bielsko-Biala 43-300 (PL)
(74) Representative: Aipex B.V.
(86) International application number: PCT/US2009/058924
(87) International publication number: WO 2011/040908

(56) References cited:
- EP-A1- 0 004 266
- DE-U1- 29 505 259
- FR-A1- 2 581 233
- FR-A1- 2 888 998

## Description

### BACKGROUND OF THE INVENTION

This application relates generally to the field of electrical power distribution, and specifically to vertical electrical busbar support systems.

Conventionally, electrical busbars are relatively heavy conductive strips disposed to conduct electricity within a switchboard, distribution station, or other electrical system or apparatus. In some applications, layers of busbars may be stacked. It follows that if an electrical short occurs, the short circuit forces may act to separate the stack, thereby disturbing the stack of busbars. Furthermore, supporting the weight of the stack within an electrical system while also considering any possible stack separation due to short circuit forces may prove difficult.

EP 0004266 and FR 2581233 both disclose arrangements in which individual busbars of a stack engage in individual grooves of a support member, to maintain the spacing of the busbars. However, the busbars are retained in the grooves by friction and clamping. There is no positive engagement in either EP 0004266 or FR 2581233 between the groove of the support member and the busbar to prevent the busbar from moving along the groove, and thus nothing that would support the weight of the busbar if it were arranged vertically.

### BRIEF DESCRIPTION OF THE INVENTION

According to a first aspect of the present invention, there is provided a vertical electrical busbar support system, comprising: at least one vertical busbar including several vertical conductive strips stacked, and each busbar including at least one notch on one lateral vertical edge of each associated conductive strip; a first support rail; a first vertical busbar support on the first support rail; a second support rail parallel to the first support rail; and a second vertical busbar support on the second support rail; wherein the first vertical busbar support is attached to the first support rail with at least one bolt, the at least one bolt spans a gap between the first vertical busbar support and the second vertical busbar support, and the second vertical busbar support is attached to the second support rail with the at least one bolt; the first vertical busbar support comprising: an insulating body; a plurality of vertical grooves extending from the top edge of the insulating body to the bottom edge of the insulating body, the plurality of vertical grooves each being disposed to engage a first lateral edge of a different vertical conductive strip of a busbar; and a horizontal support member spanning the plurality of vertical grooves, wherein the horizontal support member is a portion of the insulating body and comprises a horizontal groove spanning the plurality of vertical grooves, and wherein the horizontal support member further comprises a horizontal pin disposed within the horizontal groove, wherein the horizontal pin is disposed to engage said notch on lateral edges of each different vertical conductive strip; and the second vertical busbar support comprising: an insulating body; and a plurality of vertical grooves extending from the top edge of the insulating body to the bottom edge of the insulating body, the plurality of vertical grooves each being disposed to engage the second lateral edge of said different vertical conductive strip.

Additional features are realized through the techniques of the present exemplary embodiment. Other embodiments are described in detail herein and are considered a part of what is claimed. For a better understanding of the features of the exemplary embodiment, refer to the description and to the drawings.

### BRIEF DESCRIPTION OF THE DRAWINGS

Referring now to the drawings wherein like elements are numbered alike in the several FIGS.:
FIG. 1 is a diagram of vertical electrical busbars;
FIG. 2 is a diagram of vertical electrical busbars;
FIG. 3 is a diagram of electrical busbars;
FIG. 4 is a diagram of electrical busbars;
FIG. 5 is a diagram including a perspective view of a busbar support;
FIG. 6 is a diagram of a busbar support;
FIG. 7 is a diagram of a busbar support;
FIG. 8 is a diagram including a perspective view of a vertical busbar support;
FIG. 9 is a diagram of a busbar support;
FIG. 10 is a diagram of a horizontal support member of a busbar support;
FIG. 11 is a diagram of a busbar support;
FIG. 12 is a diagram of a busbar support;
FIG. 13 is a diagram including a perspective view of a busbar support;
FIG. 14 is a diagram including a perspective view of a vertical busbar support;
FIG. 15 is a diagram of a vertical busbar support system, according to an example embodiment;
FIG. 16 is a diagram of a vertical busbar support system, according to an example embodiment;
FIG. 17 is a diagram of a vertical busbar support system, according to an example embodiment;
FIG. 18 is a diagram of a vertical busbar support system, according to an example embodiment;
FIG. 19 is a diagram of a busbar support system, which does not fall within the scope of the invention;
FIG. 20 is a diagram depicting an example vertical busbar support system of a switchboard; and
FIG. 21 is a diagram depicting an example vertical busbar support system of a switchboard.

### DETAILED DESCRIPTION OF THE INVENTION

Detailed illustrative embodiments are disclosed herein. However, specific structural and functional details disclosed herein are merely representative for purposes of describing example embodiments. Example embodiments may, however, be embodied in many alternate forms and should not be construed as limited to only the embodiments set forth herein.

Accordingly, while example embodiments are capable of various modifications and alternative forms, embodiments thereof are shown by way of example in the drawings and will herein be described in detail. It should be understood, however, that there is no intent to limit example embodiments to the particular forms disclosed, but to the contrary, example embodiments are to cover all modifications, equivalents, and alternatives falling within the scope of the claims. Like numbers refer to like elements throughout the description of the figures.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of example embodiments. As used herein, the term "and/or" includes any and all combinations of one or more of the associated listed items.

As used herein, the singular forms "a", "an" and "the" are intended to include the plural forms as well, unless the context clearly indicates otherwise. It will be further understood that the terms "comprises", "comprising,", "includes" and/or "including", when used herein, specify the presence of stated features, integers, steps, operations, elements, and/or components, but do not preclude the presence or addition of one or more other features, integers, steps, operations, elements, components, and/or groups thereof.

Hereinafter, example embodiments will be described with reference to the attached drawings. Example embodiments of the present invention may include vertical electrical busbar support systems which provide advantages including a reduced number of physical connections which may decrease heat dissipation and increase thermal performance.

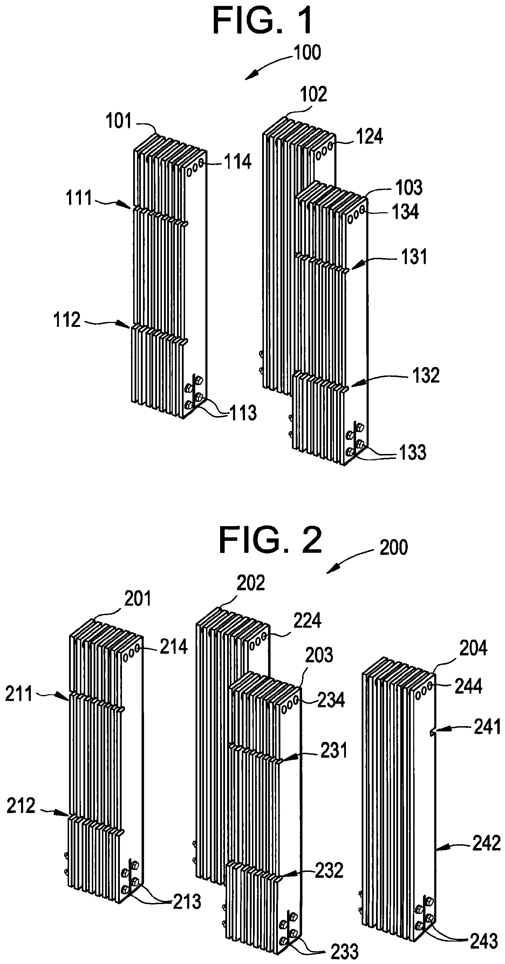

FIG. 1 is a diagram of vertical electrical busbars. As illustrated, the busbars 100 include three busbars 101, 102, and 103. For example, the busbar 101 may be a busbar for a first phase of electricity, busbar 102 may be a busbar for a second phase of electricity, and busbar 103 may be a busbar for a third phase of electricity. Each of the busbars 101, 102, and 103 may include a plurality of conductive strips stacked and affixed with bolts 113, 123 (not illustrated), and 133. Each bolt may be any suitable bolt, including threaded through-bolts with appropriate nuts on opposing ends. Each of the busbars 101, 102, and 103 may also include a plurality of through-holes 114, 124, 134. Each through-hole may be disposed to engage a through-bolt or other attachment apparatus. It follows that although busbars 101-103 are illustrated with affixing bolts on one end of each conductive strip, each end includes through-holes and these through-holes are disposed to engage through-bolts as described above.

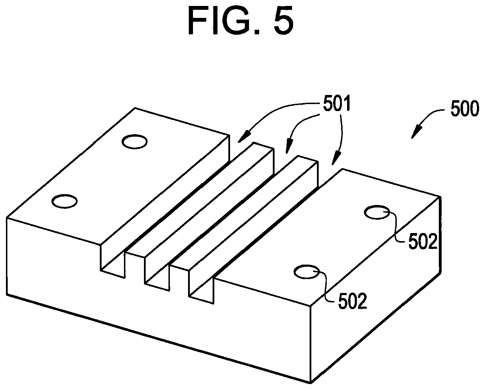

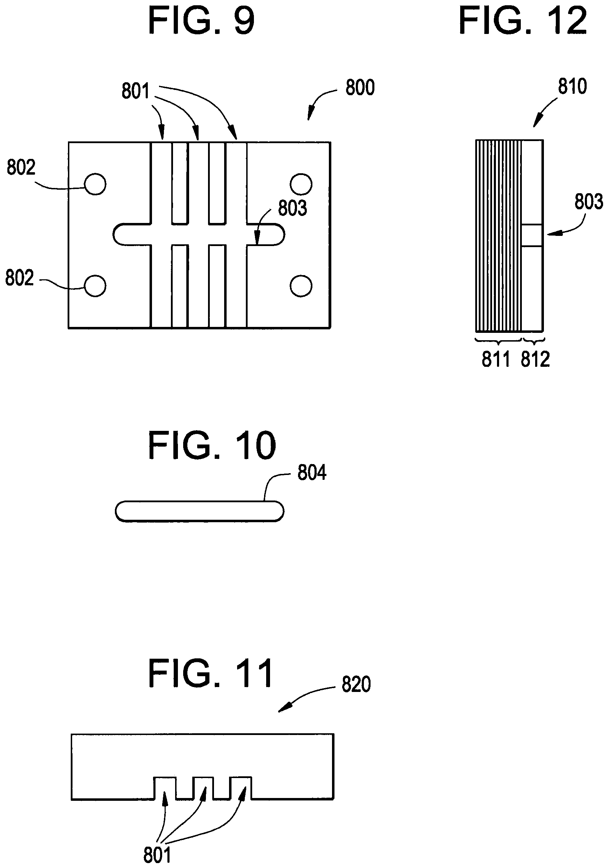

Furthermore, each busbar 101, 102, and 103 may include notches 111-112, 121-122 (not illustrated), and 131-132 on one lateral vertical edge of each associated conductive strip. The notches 111-112, 121-122, and 131-132 may be semicircular, rectangular, polygonal, or any other suitable shape. The notches 111-112, 121-122, and 131-132 may be disposed to engage a horizontal pin or horizontal extrusion of a vertical busbar support (described more fully with reference to FIGS. 5-14).

FIG. 2 is a diagram of vertical electrical busbars. As illustrated, the busbars 200 include four busbars 201, 202, 203, and 204. For example, the busbar 201 may be a busbar for a first phase of electricity, busbar 202 may be a busbar for a second phase of electricity, busbar 203 may be a busbar for a third phase of electricity, and busbar 204 may be a neutral busbar. Each of the busbars 201, 202, 203, and 204 may include a plurality of conductive strips stacked and affixed with bolts 213, 223 (not illustrated), 233, and 243. Each bolt may be any suitable bolt, including threaded through-bolts with appropriate nuts on opposing ends. Each of the busbars 201, 202, 203, and 204 may also include a plurality of through-holes 214, 224, 234, and 244. Each through-hole may be disposed to engage a through-bolt or other attachment apparatus. It follows that although busbars 201-204 are illustrated with affixing bolts on one end of each conductive strip, each end includes through-holes and these through-holes are disposed to engage through-bolts as described above.

Furthermore, each busbar 201, 202, 203, and 204 may include notches 211-212, 221-222 (not illustrated), 231-232, and 241-242 on one lateral vertical edge of each associated conductive strip. The notches 211-212, 221-222, 231-232, and 241-242 may be semicircular, rectangular, polygonal, or any other suitable shape. The notches 211-212, 221-222, 231-232, and 241-242 may be disposed to engage a horizontal pin or horizontal extrusion of a vertical busbar support (described more fully with reference to FIGS. 5-14).

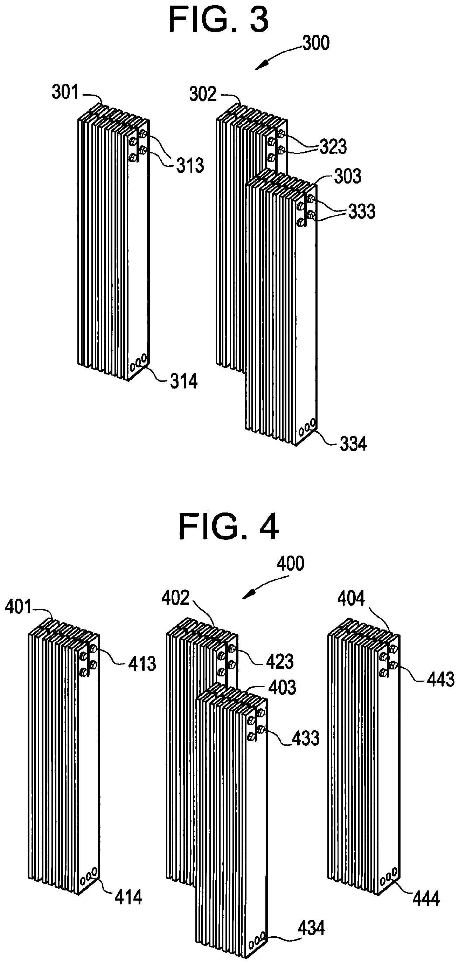

FIG. 3 is a diagram of electrical busbars. As illustrated, the busbars 300 include three busbars 301, 302, and 303. For example, the busbar 301 may be a busbar for a first phase of electricity, busbar 302 may be a busbar for a second phase of electricity, and busbar 303 may be a busbar for a third phase of electricity. Each of the busbars 301, 302, and 303 may include a plurality of conductive strips stacked and affixed with bolts 313, 323, and 333. Each bolt may be any suitable bolt, including threaded through-bolts with appropriate nuts on opposing ends. Each of the busbars 301, 302, and 303 may also include a plurality of through-holes 114, 124 (not illustrated), and 134. Each through-hole may be disposed to engage a through-bolt or other attachment apparatus. It follows that although busbars 301-303 are illustrated with affixing bolts on one end of each conductive strip, each end includes through-holes and these through-holes are disposed to engage through-bolts as described above.

FIG. 4 is a diagram of electrical busbars. As illustrated, the busbars 400 include four busbars 401, 402, 403, and 404. For example, the busbar 401 may be a busbar for a first phase of electricity, busbar 402 may be a busbar for a second phase of electricity, busbar 403 may be a busbar for a third phase of electricity, and busbar 404 may be a neutral busbar. Each of the busbars 401, 402, 403, and 404 may include a plurality of conductive strips stacked and affixed with bolts 413, 423, 433, and 443. Each bolt may be any suitable bolt, including threaded through-bolts with appropriate nuts on opposing ends. Each of the busbars 401, 402, 403, and 404 may also include a plurality of through-holes 414, 424 (not illustrated), 434, and 444. Each through-hole may be disposed to engage a through-bolt or other attachment apparatus. It follows that although busbars 401-404 are illustrated with affixing bolts on one end of each conductive strip, each end includes through-holes and these through-holes are disposed to engage through-bolts as described above.

It is noted that although FIGS. 1-4 are illustrated with a plurality of vertical busbars, embodiments of the invention should not be so limited. Any number of busbars, including a single busbar, may be applicable to any suitable implementation. Thus, example embodiments should not be construed as being limited to only three phase electrical systems.

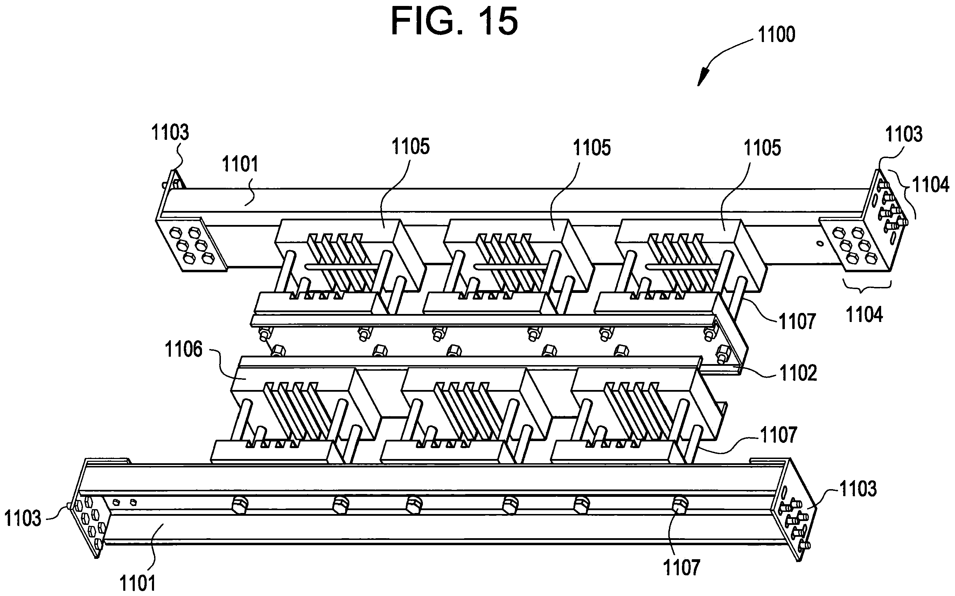

FIG. 5 is a diagram including a perspective view of a busbar support. As illustrated, the busbar support 500 includes vertical grooves 501 disposed to engage lateral edges of conductive strips of an electrical busbar. Each of the grooves 501 may be of an appropriate width comparable to the width of a conductive strip of an electrical busbar. For example, an appropriate width may be a width determined to permit a desired amount of "creepage" of the conductive strips of the electrical busbar. The grooves 501 may also be of an appropriate depth to permit a desired amount of "creepage" of the conductive strips of the busbar. Furthermore, the grooves 501 may be spaced to permit an appropriate amount of clearance between each strip of the conductive strips of the busbar. The busbar support 500 further includes through-holes 502 disposed to engage bolts or attachment apparatuses. For example, through-bolts may be used to attach the busbar support to a railing or portion of a busbar support system (described more fully with reference to FIGS. 15-19).

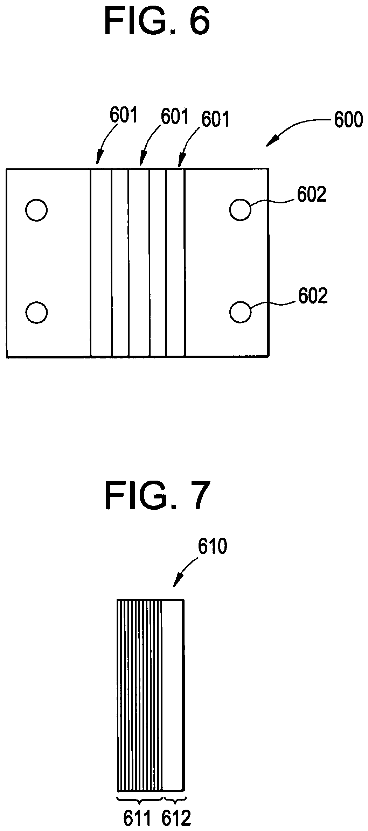

FIG. 6 and FIG. 7 are diagrams including front and side views of a busbar support. As illustrated in frontal view 600, the busbar support includes vertical grooves 601 disposed to engage lateral edges of conductive strips of an electrical busbar. Each of the grooves 601 may be of an appropriate width comparable to the width of a conductive strip of an electrical busbar. For example, an appropriate width may be a width determined to permit a desired amount of "creepage" of the conductive strips of the electrical busbar. The grooves 601 may also be of an appropriate depth to permit a desired amount of "creepage" of the conductive strips of the busbar. Furthermore, the grooves 601 may be spaced to permit an appropriate amount of clearance between each strip of the conductive strips of the busbar. The busbar support further includes through-holes 602 disposed to engage bolts or attachment apparatuses. For example, through-bolts may be used to attach the busbar support to a railing or portion of a busbar support system (described more fully with reference to FIGS. 15-19).

As illustrated in view 610, the busbar support may comprise a plurality of layers 611 of insulating and supportive material. Further, a solid portion 612 of insulating material may be supported by the layers 611. The solid portion 610 and the layered portion 611 may be comprised of the same insulating material or different insulating material. The insulating material may be any suitable insulating material for any particular application. It is noted that although the busbar support is illustrated as including layered and solid insulating portions 611-612, other implementations are also possible. For example, the busbar support may be formed of one solid portion of insulating material, or may be formed entirely of layered insulating material, or any combination thereof.

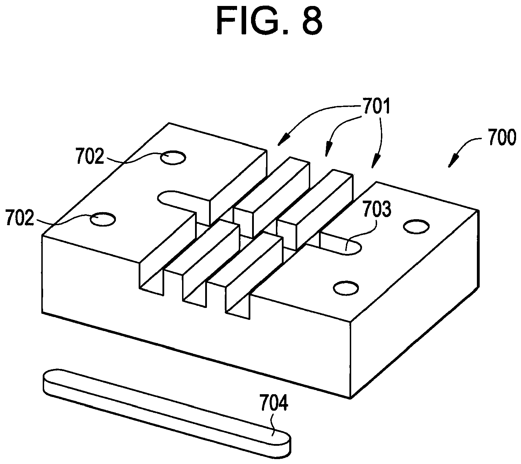

FIG. 8 is a diagram including a perspective view of a vertical busbar support. As illustrated, the vertical busbar support 700 includes vertical grooves 701 disposed to engage lateral edges of conductive strips of an electrical busbar. Each of the grooves 701 may be of an appropriate width comparable to the width of a conductive strip of an electrical busbar. For example, an appropriate width may be a width determined to permit a desired amount of "creepage" of the conductive strips of the electrical busbar. The grooves 701 may also be of an appropriate depth to permit a desired amount of "creepage" of the conductive strips of the busbar. Furthermore, the grooves 701 may be spaced to permit an appropriate amount of clearance between each strip of the conductive strips of the busbar. The vertical busbar support 700 further includes through-holes 702 disposed to engage bolts or attachment apparatuses. For example, through-bolts may be used to attach the busbar support to a railing or portion of a busbar support system (described more fully with reference to FIGS. 15-19).

As also illustrated, the vertical busbar support 700 further includes horizontal groove 703. The horizontal groove 703 may be situated near the center of the vertical busbar support 700, and may have opposing ends extending beyond the entire width of the grooves 701. The horizontal groove 703 may be disposed to engage a horizontal pin 704 fitting therein such that notches of a vertical busbar engage with the horizontal pin 704 to provide vertical support of the load (e.g., weight) of the vertical busbar. The horizontal groove may be of an appropriate depth and width to securely engage the horizontal pin 704. The horizontal pin 704 may be attached with adhesive, bolts (not illustrated), a combination, or any other suitable attachment means. The horizontal pin 704 may be formed of any suitable material including conductive or insulating materials.

Although not illustrated, the horizontal groove 703 may be omitted, leaving the illustrated groove 703 solid thereby negating a need for the horizontal pin 704. More clearly, the solid portion in place of groove 703 may be disposed to engage notches of a vertical busbar and to provide vertical support of the load (e.g., weight) of the vertical busbar.

FIGS. 8-12 are diagrams including front, side, and upper views of a vertical busbar support. As illustrated in frontal view 800 and view 820, the busbar support includes vertical grooves 801 disposed to engage lateral edges of conductive strips of an electrical busbar. Each of the grooves 801 may be of an appropriate width comparable to the width of a conductive strip of an electrical busbar. For example, an appropriate width may be a width determined to permit a desired amount of "creepage" of the conductive strips of the electrical busbar. The grooves 801 may also be of an appropriate depth to permit a desired amount of "creepage" of the conductive strips of the busbar. Furthermore, the grooves 801 may be spaced to permit an appropriate amount of clearance between each strip of the conductive strips of the busbar. The busbar support further includes through-holes 802 disposed to engage bolts or attachment apparatuses. For example, through-bolts may be used to attach the busbar support to a railing or portion of a busbar support system (described more fully with reference to FIGS. 15-19).

As also illustrated in frontal view 800, the vertical busbar support 800 further includes horizontal groove 803. The horizontal groove 803 may be situated near the center of the vertical busbar support 800, and may have opposing ends extending beyond the entire width of the grooves 801. The horizontal groove 803 may be disposed to engage a horizontal pin 804 fitting therein such that notches of a vertical busbar engage with the horizontal pin 804 to provide vertical support of the load (e.g., weight) of the vertical busbar. The horizontal groove may be of an appropriate depth and width to securely engage the horizontal pin 804. The horizontal pin 804 may be attached with adhesive, bolts (not illustrated), a combination, or any other suitable attachment means. The horizontal pin 804 may be formed of any suitable material including conductive or insulating materials.

Although not illustrated, the horizontal groove 803 may be omitted, leaving the illustrated groove 803 solid thereby negating a need for the horizontal pin 804. More clearly, the solid portion in place of groove 803 may be disposed to engage notches of a vertical busbar and to provide vertical support of the load (e.g., weight) of the vertical busbar.

As illustrated in view 810, the busbar support may comprise a plurality of layers 811 of insulating and supportive material. Further, a solid portion 812 of insulating material may be supported by the layers 811. The solid portion 810 and the layered portion 811 may be comprised of the same insulating material or different insulating material. The insulating material may be any suitable insulating material for any particular application. It is noted that although the busbar support is illustrated as including layered and solid insulating portions 811-812, other implementations are also possible. For example, the busbar support may be formed of one solid portion of insulating material, or may be formed entirely of layered insulating material, or any combination thereof.

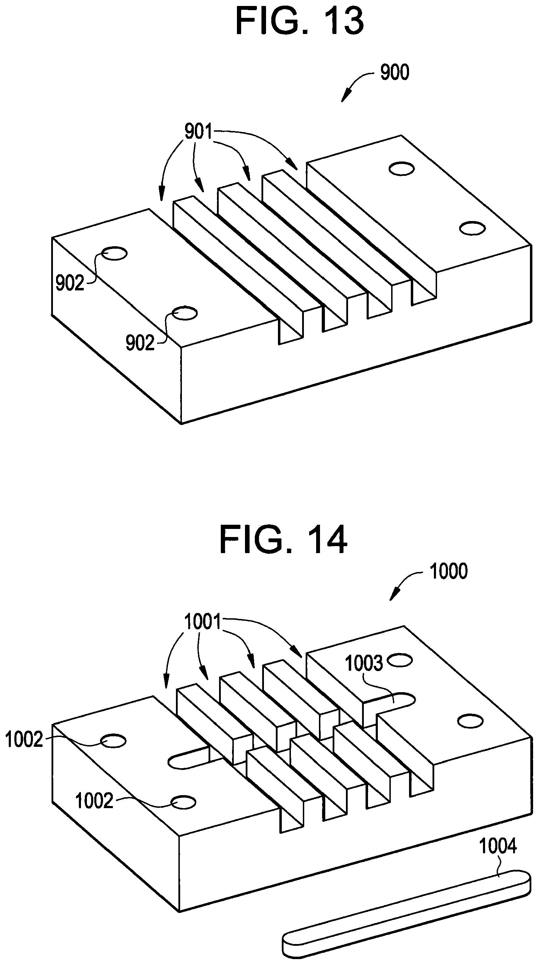

Although FIGS. 5-12 are illustrated as including a particular number of vertical grooves, embodiments of the invention should not be limited to the particular number of grooves illustrated. For example, as the vertical grooves are disposed to engage lateral vertical edges of strips of a busbar, and as any number of strips may be included in a busbar, it follows that any number of grooves may be included in a busbar support including one (1) or more grooves as necessary. For example, FIGS. 13-14 illustrate examples of busbar supports with additional grooves.

FIG. 13 is a diagram including a perspective view of a busbar support. As illustrated, the busbar support 900 includes vertical grooves 901 disposed to engage lateral edges of conductive strips of an electrical busbar. Each of the grooves 901 may be of an appropriate width comparable to the width of a conductive strip of an electrical busbar. For example, an appropriate width may be a width determined to permit a desired amount of "creepage" of the conductive strips of the electrical busbar. The grooves 901 may also be of an appropriate depth to permit a desired amount of "creepage" of the conductive strips of the busbar. Furthermore, the grooves 901 may be spaced to permit an appropriate amount of clearance between each strip of the conductive strips of the busbar. The busbar support 900 further includes through-holes 902 disposed to engage bolts or attachment apparatuses. For example, through-bolts may be used to attach the busbar support to a railing or portion of a busbar support system (described more fully with reference to FIGS. 15-19).

FIG. 14 is a diagram including a perspective view of a vertical busbar support. As illustrated, the vertical busbar support 1000 includes vertical grooves 1001 disposed to engage lateral edges of conductive strips of an electrical busbar. Each of the grooves 1001 may be of an appropriate width comparable to the width of a conductive strip of an electrical busbar. For example, an appropriate width may be a width determined to permit a desired amount of "creepage" of the conductive strips of the electrical busbar. The grooves 1001 may also be of an appropriate depth to permit a desired amount of "creepage" of the conductive strips of the busbar. Furthermore, the grooves 1001 may be spaced to permit an appropriate amount of clearance between each strip of the conductive strips of the busbar. The vertical busbar support 1000 further includes through-holes 1002 disposed to engage bolts or attachment apparatuses. For example, through-bolts may be used to attach the busbar support to a railing or portion of a busbar support system (described more fully with reference to FIGS. 15-19).

As also illustrated, the vertical busbar support 1000 further includes horizontal groove 1003. The horizontal groove 1003 may be situated near the center of the vertical busbar support 1000, and may have opposing ends extending beyond the entire width of the grooves 1001. The horizontal groove 1003 may be disposed to engage a horizontal pin 1004 fitting therein such that notches of a vertical busbar engage with the horizontal pin 1004 to provide vertical support of the load (e.g., weight) of the vertical busbar. The horizontal groove may be of an appropriate depth and width to securely engage the horizontal pin 1004. The horizontal pin 1004 may be attached with adhesive, bolts (not illustrated), a combination, or any other suitable attachment means. The horizontal pin 704 may be formed of any suitable material including conductive or insulating materials.

Although not illustrated, the horizontal groove 1003 may be omitted, leaving the illustrated groove 1003 solid thereby negating a need for the horizontal pin 1004. More clearly, the solid portion in place of groove 1003 may be disposed to engage notches of a vertical busbar and to provide vertical support of the load (e.g., weight) of the vertical busbar.

Hereinafter, vertical busbar support systems including the busbars and busbar supports discussed above are described in detail.

FIG. 15 is a diagram of a vertical busbar support system, according to an example embodiment. The system 1100 may be configured as a bus-coupling system providing both vertical support of the load/weight of vertical busbars and bus-coupling. For example, appropriate vertical busbars may include busbars at least somewhat similar to the busbars 100.

The system 1100 may include support rails 1101 and 1102 disposed to support busbar supports 1105 and 1106. The support rails 1101 may include a plurality of vertical busbar supports 1105 attached thereto. For example, the plurality of busbar supports 1105 may be attached to the support rails 1101 with bolts 1107. The support rails 1101 may include brackets 1103 attached thereto with attachment through-holes/bolts 1104. The support rails 1102 may include a plurality of busbar supports 1106 attached thereto. For example, the plurality of busbar supports 1106 may be attached to the support rails 1102 with bolts 1107.

The support rails 1101-1102 and the brackets 1103 may be formed of any suitable material including non-magnetic steel profiled material. The bolts 1107 may be surrounded by insulating sleeves or material, or may not be insulated.

The plurality of vertical busbar supports 1105 may be somewhat similar to the vertical busbar supports 700, 800, and 1000, and thus exhaustive description is omitted herein for the sake of brevity. The plurality of busbar supports 1106 may be somewhat similar to busbar supports 500, 600, and 900, and thus exhaustive description is omitted herein for the sake of brevity.

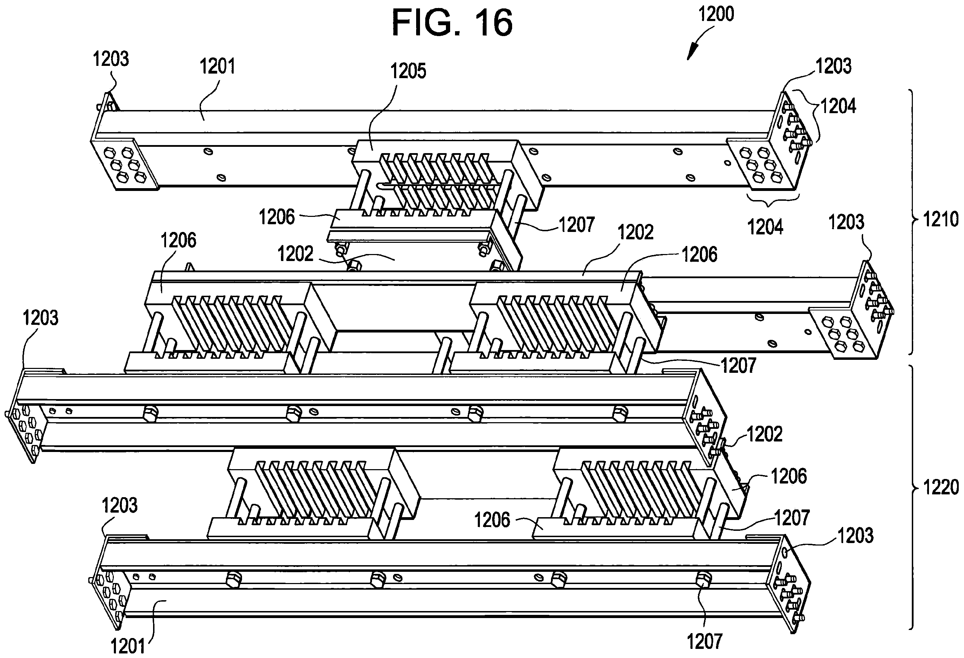

FIG. 16 is a diagram of a vertical busbar support system, according to an example embodiment. The system 1200 may be configured as a bus-coupling system providing both vertical support of the load/weight of vertical busbars and bus-coupling. For example, appropriate vertical busbars may include busbars at least somewhat similar to the busbars 100.

The system 1200 may include support rails 1201 and 1202 disposed to support busbar supports 1205 and 1206. The support rails 1201 may include a plurality of vertical busbar supports 1205 attached thereto. For example, the plurality of busbar supports 1205 may be attached to the support rails 1201 with bolts 1207. The support rails 1201 may include brackets 1203 attached thereto with attachment through-holes/bolts 1204. The support rails 1202 may include a plurality of busbar supports 1206 attached thereto. For example, the plurality of busbar supports 1106 may be attached to the support rails 1202 with bolts 1207.

The support rails 1201-1202 and the brackets 1203 may be formed of any suitable material including non-magnetic steel profiled material. The bolts 1207 may be surrounded by insulating sleeves or material, or may not be insulated.

The plurality of vertical busbar supports 1205 may be somewhat similar to the vertical busbar supports 700, 800, and 1000, and thus exhaustive description is omitted herein for the sake of brevity. The plurality of busbar supports 1206 may be somewhat similar to busbar supports 500, 600, and 900, and thus exhaustive description is omitted herein for the sake of brevity.

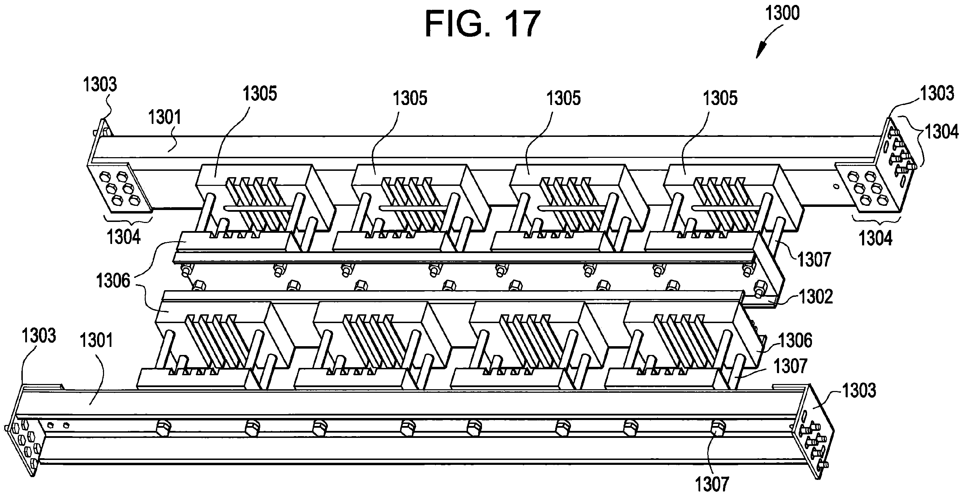

FIG. 17 is a diagram of a vertical busbar support system, according to an example embodiment. The system 1300 may be configured as a bus-coupling system providing both vertical support of the load/weight of vertical busbars and bus-coupling. For example, appropriate vertical busbars may include busbars at least somewhat similar to the busbars 200.

The system 1300 may include support rails 1301 and 1302 disposed to support busbar supports 1305 and 1306. The support rails 1301 may include a plurality of vertical busbar supports 1305 attached thereto. For example, the plurality of busbar supports 1305 may be attached to the support rails 1301 with bolts 1307. The support rails 1301 may include brackets 1303 attached thereto with attachment through-holes/bolts 1304. The support rails 1302 may include a plurality of busbar supports 1306 attached thereto. For example, the plurality of busbar supports 1306 may be attached to the support rails 1302 with bolts 1307.

The support rails 1301-1302 and the brackets 1303 may be formed of any suitable material including non-magnetic steel profiled material. The bolts 1307 may be surrounded by insulating sleeves or material, or may not be insulated.

The plurality of vertical busbar supports 1305 may be somewhat similar to the vertical busbar supports 700, 800, and 1000, and thus exhaustive description is omitted herein for the sake of brevity. The plurality of busbar supports 1306 may be somewhat similar to busbar supports 500, 600, and 900, and thus exhaustive description is omitted herein for the sake of brevity.

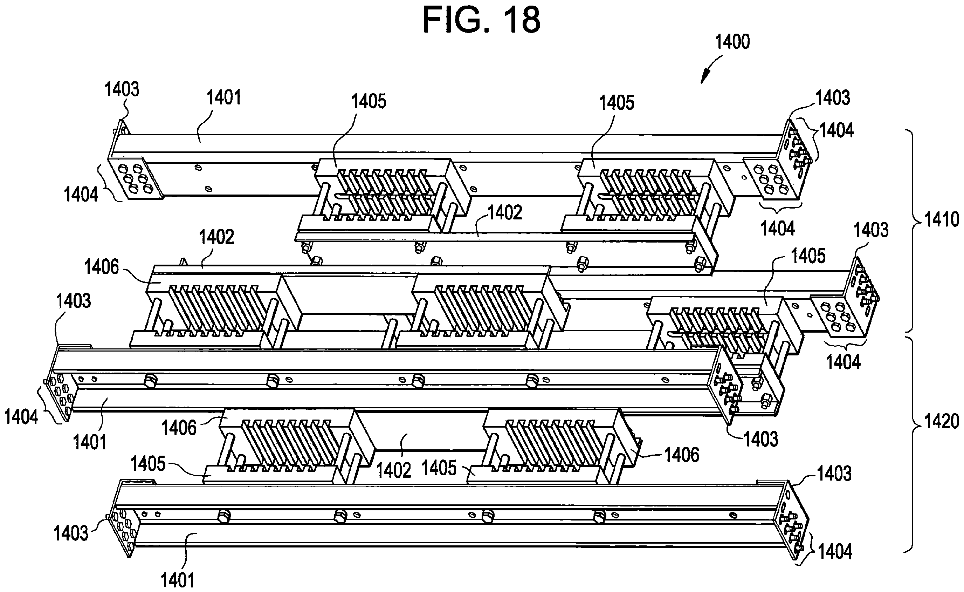

FIG. 18 is a diagram of a vertical busbar support system, according to an example embodiment. The system 1400 may be configured as a bus-coupling system providing both vertical support of the load/weight of vertical busbars and bus-coupling. For example, appropriate vertical busbars may include busbars at least somewhat similar to the busbars 200.

The system 1400 may include support rails 1401 and 1402 disposed to support busbar supports 1405 and 1406. The support rails 1401 may include a plurality of vertical busbar supports 1405 attached thereto. For example, the plurality of busbar supports 1405 may be attached to the support rails 1401 with bolts 1407. The support rails 1401 may include brackets 1403 attached thereto with attachment through-holes/bolts 1404. The support rails 1402 may include a plurality of busbar supports 1406 attached thereto. For example, the plurality of busbar supports 1406 may be attached to the support rails 1402 with bolts 1407.

The support rails 1401-1402 and the brackets 1403 may be formed of any suitable material including non-magnetic steel profiled material. The bolts 1407 may be surrounded by insulating sleeves or material, or may not be insulated.

The plurality of vertical busbar supports 1405 may be somewhat similar to the vertical busbar supports 700, 800, and 1000, and thus exhaustive description is omitted herein for the sake of brevity. The plurality of busbar supports 1406 may be somewhat similar to busbar supports 500, 600, and 900, and thus exhaustive description is omitted herein for the sake of brevity.

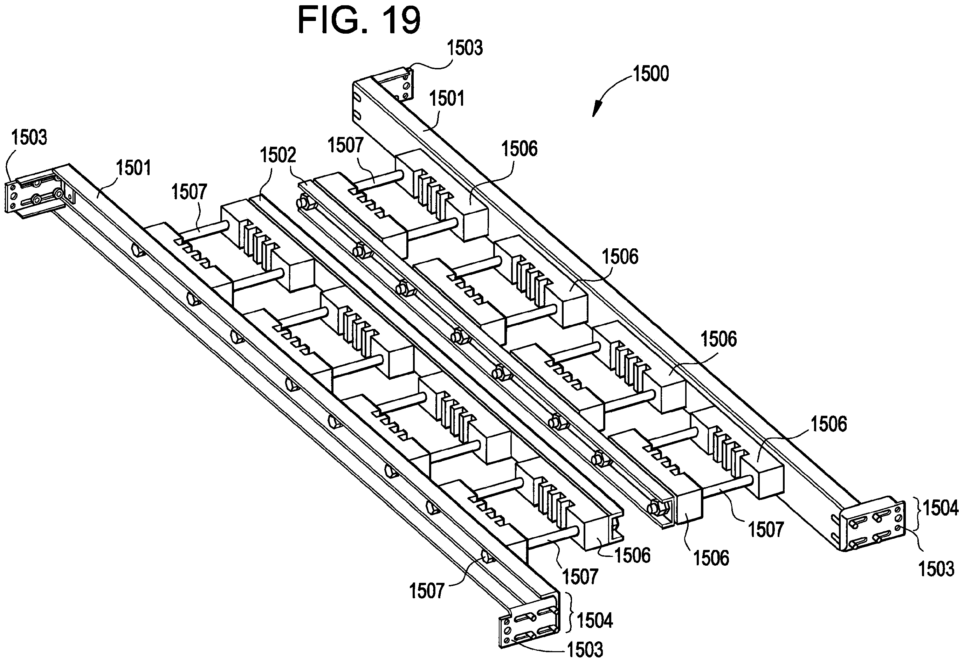

FIG. 19 is a diagram of a busbar support system. It should be noted that the busbar system shown in FIG. 19 does not fall within the scope of the invention, as the busbar supports do not include horizontal support members. The system 1500 may be configured as a bus-coupling system providing both vertical support of the load/weight of vertical busbars and bus-coupling. For example, appropriate vertical busbars may include busbars at least somewhat similar to the busbars 300 and 400.

The system 1500 may include support rails 1501 and 1502 disposed to support busbar supports 1506. The support rails 1501 may include a plurality of busbar supports 1506 attached thereto. For example, the plurality of busbar supports 1506 may be attached to the support rails 1501 with bolts 1507. The support rails 1501 may include brackets 1503 attached thereto with attachment through-holes/bolts 1504. The support rails 1502 may include a plurality of busbar supports 1506 attached thereto. For example, the plurality of busbar supports 1506 may be attached to the support rails 1502 with bolts 1507.

The support rails 1501-1502 and the brackets 1503 may be formed of any suitable material including non-magnetic steel profiled material. The bolts 1507 may be surrounded by insulating sleeves or material, or may not be insulated.

The plurality of busbar supports 1506 may be somewhat similar to busbar supports 500, 600, and 900, and thus exhaustive description is omitted herein for the sake of brevity.

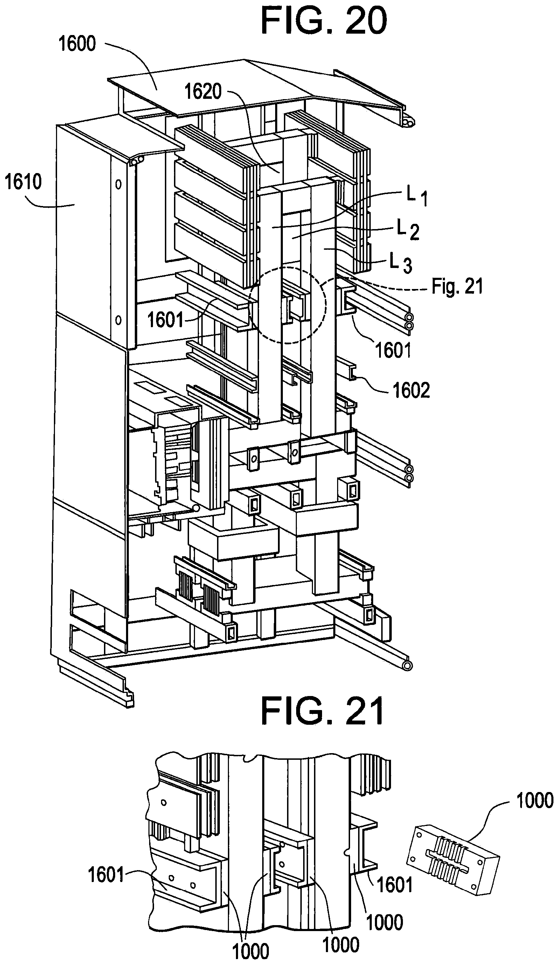

FIG. 20-21 is a diagram depicting an example vertical busbar support system of a switchboard. The system 1600 may include a housing 1610 enclosing the system 1600. The system 1600 may include a plurality of vertical busbars 1620 supported by a plurality of vertical busbar supports 1000 (e.g., "hanging supports"). Each support of the plurality of vertical busbar supports 1000 may be attached to a supporting rail 1601. For example, the supporting rail 1601 may be similar to support rails 1101, 1201, 1301, and 1401. Each support of the plurality of vertical busbar supports 900 may include a horizontal groove including a horizontal pin engaging notches on the lateral vertical edges of strips of the vertical busbars 1620.

Therefore, as described above, example embodiments provide vertical electrical busbar support systems. The vertical busbar support systems include vertical busbar supports and vertical busbars disposed to engage one another. For example, strips of the vertical busbars include notches along lateral vertical edges disposed to engage horizontal pins or support members. The vertical busbar supports may include the horizontal pins within horizontal grooves, or may include horizontal support members formed from the solid body of the vertical busbar supports. Additionally, the vertical busbar supports include vertical grooves disposed to engage with the strips of the vertical busbars.

Detailed illustrative embodiments are described above. The corresponding structures, materials, acts, and equivalents of all means or step plus function elements in the claims below are intended to include any structure, material, or act for performing the function in combination with other claimed elements as specifically claimed. The description of the present invention has been presented for purposes of illustration and description, but is not intended to be exhaustive or limited to the invention in the form disclosed. Many modifications and variations will be apparent to those of ordinary skill in the art without departing from the scope of the invention. The embodiment was chosen and described in order to best explain the principles of the invention and the practical application, and to enable others of ordinary skill in the art to understand the invention for various embodiments with various modifications as are suited to the particular use contemplated.

## Claims

1. A vertical electrical busbar support system (1100; 1200; 1300; 1400; 1600), comprising:
at least one vertical busbar (101, 102, 103; 201, 202, 203, 204) including several vertical conductive strips stacked, and each busbar (101, 102, 103; 201, 202, 203, 204; 1620) including at least one notch (111, 112, 121, 122, 131, 132; 211, 212, 221, 222, 231, 232, 241, 242) on one lateral vertical edge of each associated conductive strip;
a first support rail (1101; 1201; 1301; 1401);
a first vertical busbar support (1105; 1205; 1305; 1405) on the first support rail (1101; 1201; 1301; 1401);
a second support rail (1102; 1202; 1302; 1402) parallel to the first support rail (1101; 1201; 1301; 1401); and
a second vertical busbar support (1106; 1206; 1306; 1406) on the second support rail (1102; 1202; 1302; 1402);
wherein the first vertical busbar support (1105; 1205; 1305; 1405) is attached to the first support rail (1101; 1201; 1301; 1401) with at least one bolt (1107; 1207; 1307; 1407), the at least one bolt (1107; 1207; 1307; 1407) spans a gap between the first vertical busbar support (1105; 1205; 1305; 1405) and the second vertical busbar support (1106; 1206; 1306; 1406), and the second vertical busbar support (1106; 1206; 1306; 1406) is attached to the second support rail (1102; 1202; 1302; 1402) with the at least one bolt (1107; 1207; 1307; 1407);
the first vertical busbar support (1105; 1205; 1305; 1405) comprising:
- an insulating body;
- a plurality of vertical grooves (701; 801; 1001) extending from the top edge of the insulating body to the bottom edge of the insulating body,
the plurality of vertical grooves (701; 801; 1001) each being disposed to engage a first lateral edge of a different vertical conductive strip of a busbar (101, 102, 103; 201, 202, 203, 204); and
- a horizontal support member (703, 704; 803, 804; 1003, 1004) spanning the plurality of vertical grooves (701; 801; 1001),
wherein the horizontal support member (703, 704; 803, 804; 1003, 1004) is a portion of the insulating body and comprises a horizontal groove (703; 803; 1003) spanning the plurality of vertical grooves (701; 801; 1001), and wherein the horizontal support member (703, 704; 803, 804; 1003, 1004) further comprises a horizontal pin (704; 804; 1004) disposed within the horizontal groove (703; 803; 1003), wherein the horizontal pin (704; 804; 1004) is disposed to engage said notch (111, 112, 121, 122, 131, 132; 211, 212, 221, 222, 231, 232, 241, 242) on lateral edges of each different vertical conductive strip;
and the second vertical busbar support (1106; 1206; 1306; 1406) comprising:
an insulating body; and
a plurality of vertical grooves (501; 601; 901) extending from the top edge of the insulating body to the bottom edge of the insulating body,
the plurality of vertical grooves (501; 601; 901) each being disposed to engage the second lateral edge of said different vertical conductive strip.

2. The system of claim 1, wherein the second vertical busbar support (1106; 1206; 1306; 1406) includes a horizontal support member spanning the at least one vertical groove, and the horizontal support member is disposed to engage a notch on the second lateral edge of the at least one vertical conductive strip.

3. The system of any one of the preceding claims, wherein the first vertical busbar support (1105; 1205; 1305; 1405) is a solid insulating body and the second vertical busbar support (1106; 1206; 1306; 1406) is a solid insulating body.

4. The system of any one of the preceding claims, wherein the first vertical busbar support (1105; 1205; 1305; 1405) includes a layered insulating body (811) beneath the insulating body (812), and wherein the second vertical busbar support (1106; 1206; 1306; 1406) preferably includes a layered insulating body (611) beneath the insulating body (612).

5. The system of any one of the preceding claims, further comprising:
a plurality of vertical busbars (101, 102, 103; 201, 202, 203, 204), each including at least one vertical conductive strip;
a plurality of first vertical busbar supports (1105; 1205; 1305; 1405) on the first support rail (1101; 1201; 1301; 1401), the plurality of first vertical busbar supports (1105; 1205; 1305; 1405) each including an insulating body, at least one vertical groove (701; 801; 1001) extending from a top edge of the insulating body to a bottom edge of the insulating body, and a horizontal support member (703, 704; 803, 804; 1003, 1004) spanning the at least one vertical groove (701; 801; 1001); and
a plurality of second vertical busbar supports (1106; 1206; 1306; 1406) on the second support rail (1102; 1202; 1302; 1402), the plurality of second vertical busbar supports (1106; 1206; 1306; 1406) including an insulating body and at least one vertical groove (501; 601; 901) extending from a top edge of the insulating body to a bottom edge of the insulating body, wherein the plurality of second vertical busbar supports preferably each include a horizontal support member spanning respective vertical grooves (501; 601; 901).

## Patentansprüche

1. Vertikales elektrisches Stromschienenträgersystem (1100; 1200; 1300; 1400; 1600), umfassend:
zumindest eine vertikale Stromschiene (101,102, 103; 201, 202, 203, 204), die mehrere gestapelte vertikale leitfähige Streifen beinhaltet, und wobei jede Stromschiene (101,102, 103; 201, 202, 203, 204; 1620) zumindest eine Kerbe (111, 112, 121, 122, 131, 132; 211, 212, 221, 222, 231, 232, 241, 242) an einem seitlichen vertikalen Rand jedes verbundenen leitfähigen Streifens beinhaltet;
eine erste Trägerschiene (1101; 1201; 1301; 1401);
einen ersten vertikalen Stromschienenträger (1105; 1205; 1305; 1405) an der ersten Trägerschiene (1101; 1201; 1301; 1401);
eine zweite Trägerschiene (1102; 1202; 1302; 1402) parallel zu der ersten Trägerschiene (1101; 1201; 1301; 1401); und
einen zweiten vertikalen Stromschienenträger (1106; 1206; 1306; 1406) an der zweiten Trägerschiene (1102; 1202; 1302; 1402);
wobei der erste vertikale Stromschienenträger (1105; 1205; 1305; 1405) an der ersten Trägerschiene (1101; 1201; 1301; 1401) mit zumindest einer Schraube (1107; 1207; 1307; 1407) angebracht ist, wobei die zumindest eine Schraube (1107; 1207; 1307; 1407) eine Lücke zwischen dem ersten vertikalen Stromschienenträger (1105; 1205; 1305; 1405) und dem zweiten vertikalen Stromschienenträger (1106; 1206; 1306; 1406) umspannt, und der zweite vertikale Stromschienenträger (1106; 1206; 1306; 1406) an der zweiten Trägerschiene (1102; 1202; 1302; 1402) mit der zumindest einen Schraube (1107; 1207; 1307; 1407) angebracht ist;
wobei der erste vertikale Stromschienenträger (1105; 1205; 1305; 1405) Folgendes umfasst:
- einen Isolierkörper;
- eine Vielzahl von vertikalen Nuten (701; 801; 1001), die sich von dem oberen Rand des Isolierkörpers zu dem unteren Rand des Isolierkörpers erstreckt,
wobei die Vielzahl von vertikalen Nuten (701; 801; 1001) jeweils angeordnet ist, um einen ersten seitlichen Rand eines anderen vertikalen leitfähigen Streifens einer Stromschiene (101,102, 103; 201, 202, 203, 204) in Eingriff zu nehmen; und
- ein horizontales Trägerelement (703, 704; 803, 804; 1003,1004), das die Vielzahl von vertikalen Nuten (701; 801; 1001) umspannt,
wobei das horizontale Trägerelement (703, 704; 803, 804; 1003,1004) ein Abschnitt des Isolierkörpers ist und eine horizontale Nut (703; 803; 1003) umfasst, die die Vielzahl von vertikalen Nuten (701; 801; 1001) umspannt, und wobei das horizontale Trägerelement (703, 704; 803, 804; 1003, 1004) ferner einen horizontalen Stift (704; 804; 1004) umfasst, der innerhalb der horizontalen Nut (703; 803; 1003) angeordnet ist,
wobei der horizontale Stift (704; 804; 1004) angeordnet ist, um die Kerbe (111, 112, 121, 122, 131, 132; 211, 212, 221, 222, 231, 232, 241, 242) an seitlichen Rändern jedes unterschiedlichen vertikalen leitfähigen Streifens in Eingriff zu nehmen;
und wobei der zweite vertikale Stromschienenträger (1106; 1206; 1306; 1406) Folgendes umfasst:
einen Isolierkörper; und
eine Vielzahl von vertikalen Nuten (501; 601; 901), die sich von dem oberen Rand des Isolierkörpers zu dem unteren Rand des Isolierkörpers erstreckt,
wobei die Vielzahl von vertikalen Nuten (501; 601; 901) jeweils angeordnet ist, um den zweiten seitlichen Rand jedes unterschiedlichen vertikalen leitfähigen Streifens in Eingriff zu nehmen.

2. System nach Anspruch 1, wobei der zweite vertikale Stromschienenträger (1106; 1206; 1306; 1406) ein horizontales Trägerelement beinhaltet, das die zumindest eine vertikale Nut umspannt, und das horizontale Trägerelement angeordnet ist, um eine Kerbe an dem zweiten seitlichen Rand des zumindest einen vertikalen leitfähigen Streifens in Eingriff zu nehmen.

3. System nach einem der vorhergehenden Ansprüche, wobei der erste vertikale Stromschienenträger (1105; 1205; 1305; 1405) ein fester Isolierkörper ist und der zweite vertikale Stromschienenträger (1106; 1206; 1306; 1406) ein fester Isolierkörper ist.

4. System nach einem der vorhergehenden Ansprüche, wobei der erste vertikale Stromschienenträger (1105; 1205; 1305; 1405) einen geschichteten Isolierkörper (811) unter dem Isolierkörper (812) beinhaltet, und wobei der zweite vertikale Stromschienenträger (1106; 1206; 1306; 1406) bevorzugt einen geschichteten Isolierkörper (611) unter dem Isolierkörper (612) beinhaltet.

5. System nach einem der vorhergehenden Ansprüche, ferner umfassend:
eine Vielzahl von vertikalen Stromschienen (101, 102, 103; 201, 202, 203, 204), die jeweils zumindest einen vertikalen leitfähigen Streifen beinhalten;
eine Vielzahl von ersten vertikalen Stromschienenträgern (1105; 1205; 1305; 1405) an der ersten Trägerschiene (1101; 1201; 1301; 1401), wobei die Vielzahl von ersten vertikalen Stromschienenträgern (1105; 1205; 1305; 1405) jeweils einen Isolierkörper, zumindest eine vertikale Nut (701; 801; 1001), die sich von einem oberen Rand des Isolierkörpers zu einem unteren Rand des Isolierkörpers erstreckt, und ein horizontales Trägerelement (703, 704; 803, 804; 1003, 1004) beinhaltet, das die zumindest eine vertikale Nut (701; 801; 1001) umspannt; und eine Vielzahl von zweiten vertikalen Stromschienenträgern (1106; 1206; 1306; 1406) an der zweiten Trägerschiene (1102; 1202; 1302; 1402), wobei die Vielzahl von zweiten vertikalen Stromschienenträgern (1106; 1206; 1306; 1406) einen Isolierkörper und zumindest eine vertikale Nut (501; 601; 901) beinhaltet, die sich von einem oberen Rand des Isolierkörpers zu einem unteren Rand des Isolierkörpers erstreckt, wobei die Vielzahl von zweiten vertikalen Stromschienenträgern bevorzugt jeweils ein horizontales Trägerelement beinhaltet, das jeweilige vertikale Nuten (501; 601; 901) umspannt.

## Revendications

1. Système de support de barres collectrices électriques verticales (1100 ; 1200 ; 1300 ; 1400 ; 1600) comprenant :
au moins une barre collectrice verticale (101, 102, 103 ; 201, 202, 203, 204) comportant plusieurs bandes conductrices verticales empilées, et chaque barre collectrice (101, 102, 103 ; 201, 202, 203, 204 ; 1620) comportant au moins une encoche (111, 112, 121, 122, 131, 132 ; 211, 212, 221, 222, 231, 232, 241, 242) sur un bord vertical latéral de chaque bande conductrice associée ;
un premier rail de support (1101 ; 1201 ; 1301 ; 1401) ;
un premier support de barres collectrices verticales (1105 ; 1205 ; 1305 ; 1405) sur le premier rail de support (1101 ; 1201 ; 1301 ; 1401) ;
un deuxième rail de support (1102 ; 1202 ; 1302 ; 1402) parallèle au premier rail de support (1101 ; 1201 ; 1301 ; 1401) ; et
un deuxième support de barres collectrices verticales (1106 ; 1206 ; 1306 ; 1406) sur le deuxième rail de support (1102 ; 1202 ; 1302 ; 1402) ;
dans lequel le premier support de barres collectrices verticales (1105 ; 1205 ; 1305 ; 1405) est fixé au premier rail de support (1101 ; 1201 ; 1301 ; 1401) par au moins un boulon (1107 ; 1207 ; 1307 ; 1407), l'au moins un boulon (1107 ; 1207 ; 1307; 1407) couvre un espace entre le premier support de barres collectrices verticales (1105 ; 1205 ; 1305 ; 1405) et le deuxième support de barres collectrices verticales (1106 ; 1206 ; 1306 ; 1406), et le deuxième support de barres collectrices verticales (1106 ; 1206 ; 1306 ; 1406) est fixé au deuxième rail de support (1102 ; 1202 ; 1302 ; 1402) par l'au moins un boulon (1107 ; 1207 ; 1307 ; 1407) ;
le premier support de barres collectrices verticales (1105 ; 1205 ; 1305 ; 1405) comprenant :
- un corps isolant ;
- une pluralité de rainures verticales (701 ; 801 ; 1001) s'étendant du bord supérieur du corps isolant au bord inférieur du corps isolant,
la pluralité de rainures verticales (701 ; 801 ; 1001) étant disposées chacune de manière à venir en prise avec un premier bord latéral d'une bande conductrice verticale différente d'une barre collectrice (101, 102, 103 ; 201, 202, 203, 204) ; et
- un élément de support horizontal (703, 704 ; 803, 804 ; 1003, 1004) s'étendant sur la pluralité de rainures verticales (701 ; 801 ; 1001),
dans lequel l'élément de support horizontal (703, 704 ; 803, 804 ; 1003, 1004) est une partie du corps isolant et comprend une rainure horizontale (703 ; 803 ; 1003) s'étendant sur la pluralité de rainures verticales (701 ; 801 ; 1001), et dans lequel l'élément de support horizontal (703, 704 ; 803, 804 ; 1003, 1004) comprend en outre une broche horizontale (704 ; 804 ; 1004) disposée dans la rainure horizontale (703 ; 803 ; 1003), dans lequel la broche horizontale (704 ; 804 ; 1004) est disposée de manière à venir en prise avec ladite encoche (111, 112, 121, 122, 131, 132 ; 211, 212, 221, 222, 231, 232, 241, 242) sur des bords latéraux de chaque bande conductrice verticale différente ; et
le deuxième support de barres collectrices verticales (1106 ; 1206 ; 1306 ; 1406) comprenant :
un corps isolant ; et
une pluralité de rainures verticales (501 ; 601 ; 901) s'étendant du bord supérieur du corps isolant au bord inférieur du corps isolant,
la pluralité de rainures verticales (501 ; 601 ; 901) étant disposées chacune de manière à venir en prise avec le deuxième bord latéral de ladite bande conductrice verticale différente.

2. Système de la revendication 1, dans lequel le deuxième support de barres collectrices verticales (1106 ; 1206 ; 1306 ; 1406) comporte un élément de support horizontal s'étendant sur l'au moins une rainure verticale, et l'élément de support horizontal est disposé de manière à venir en prise avec une encoche sur le deuxième bord latéral de l'au moins une bande conductrice verticale.

3. Système de l'une quelconque des revendications précédentes, dans lequel le premier support de barres collectrices verticales (1105 ; 1205 ; 1305 ; 1405) est un corps isolant solide et le deuxième support de barres collectrices verticales (1106 ; 1206 ; 1306 ; 1406) est un corps isolant solide.

4. Système de l'une quelconque des revendications précédentes, dans lequel le premier support de barres collectrices verticales (1105 ; 1205 ; 1305 ; 1405) comporte un corps isolant en couches (811) sous le corps isolant (812), et dans lequel le deuxième support de barres collectrices verticales (1106 ; 1206 ; 1306 ; 1406) comporte de préférence un corps isolant en couches (611) sous le corps isolant (612).

5. Système de l'une quelconque des revendications précédentes, comprenant en outre :
une pluralité de barres collectrices verticales (101, 102, 103 ; 201, 202, 203, 204), comportant chacune au moins une bande conductrice verticale ;
une pluralité de premiers supports de barres collectrices verticales (1105 ; 1205 ; 1305 ; 1405) sur le premier rail de support (1101 ; 1201 ; 1301 ; 1401), la pluralité de premiers supports de barres collectrices verticales (1105 ; 1205 ; 1305 ; 1405) comportant chacun un corps isolant, au moins une rainure verticale (701 ; 801 ; 1001) s'étendant d'un bord supérieur du corps isolant à un bord inférieur du corps isolant, et un élément de support horizontal (703, 704 ; 803, 804 ; 1003, 1004) s'étendant sur au moins une rainure verticale (701 ; 801 ; 1001) ; et
une pluralité de deuxièmes supports de barres collectrices verticales (1106 ; 1206 ; 1306 ; 1406) sur le deuxième rail de support (1102 ; 1202 ; 1302 ; 1402), la pluralité de deuxièmes supports de barres collectrices verticales (1106 ; 1206 ; 1306 ; 1406) comportant un corps isolant et au moins une rainure verticale (501 ; 601 ; 901) s'étendant d'un bord supérieur du corps isolant à un bord inférieur du corps isolant, dans lequel la pluralité de deuxièmes supports de barres collectrices verticales comportent chacun de préférence un élément de support horizontal s'étendant sur des rainures verticales respectives (501 ; 601 ; 901).
